# EUROPEAN PATENT SPECIFICATION

(11) **EP 3 105 623 B1**
(45) Date of publication and mention of the grant of the patent: **16.09.2020**
(21) Application number: 14816431.2
(22) Date of filing: 04.12.2014
(51) Int. Cl.: G02B 6/02

(54) **MICROSTRUCTURED OPTICAL FIBRE WITH SELECTIVELY ENLARGED SPACES OF REDUCED REFRACTION INDEX**
MIKROSTRUKTURIERTE OPTISCHE FASER MIT SELEKTIV VERGRÖSSERTEN HOHLRÄUMEN MIT REDUZIERTEM BRECHUNGSINDEX
FIBRE OPTIQUE MICROSTRUCTURÉE COMPORTANT DES ESPACES SÉLECTIVEMENT AGRANDIS À INDICE DE RÉFRACTION RÉDUIT

(30) Priority: 04.12.2013 PL 40637213
(43) Date of publication of application: 21.12.2016
(73) Proprietor: Polskie Centrum Fotoniki i Swiatlowodów, 20-061 Lublin (PL)
(72) Inventor: HOLDYNSKI, Zbigniew, PL-01-129 Warszawa (PL); SZYMANSKI, Michal, PL-03-910 Warszawa (PL); TENDERENDA, Tadeusz, PL-02-796 Warszawa (PL); MURAWSKI, Michal, PL-03-341 Warszawa (PL); NASILOWSKI, Tomasz, PL-00-124 Warszawa (PL); NAPIERALA, Marek, PL-54-129 Wroclaw (PL); OSTROWSKI, Lukasz, PL-05-126 Nieporet (PL); PAWLIK, Katarzyna Joanna, PL-03-126 Warszawa (PL); SLOWIKOWSKI, Mateusz, PL-00-910 Warszawa (PL); SZOSTKIEWICZ, Lukasz, PL-87-100 Torun (PL); STEPIEN, Karol, 01-134 Warszawa (PL); ZIOLOWICZ, Anna Katarzyna, 25-752 Kielce (PL)
(74) Representative: Bury, Marek
(86) International application number: PCT/PL2014/050075
(87) International publication number: WO 2015/084198

(56) References cited:
- EP-A1- 1 712 935
- EP-A2- 2 166 385
- WO-A1-00/49436
- WO-A1-02/084350
- WO-A1-03/079074
- WO-A1-2004/104659
- WO-A1-2010/107138
- US-A1- 2010 266 251
- US-A1- 2010 296 784
- CHEN ET AL: "New nonlinear and dispersion flattened photonic crystal fiber with low confinement loss", OPTICS COMMUNICATIONS, NORTH-HOLLAND PUBLISHING CO. AMSTERDAM, NL, vol. 281, no. 8, 3 January 2008 (2008-01-03), pages 2073-2076, XP022504274, ISSN: 0030-4018, DOI: 10.1016/J.OPTCOM.2007.12.006
- RICHARD ZELENY ET AL: "Nearly zero dispersion-flattened photonic crystal fiber with fluorine-doped three- fold symmetry core", OPTICAL ENGINEERING, vol. 52, no. 4, 1 April 2013 (2013-04-01), pages 045003-1, XP055180286,
- R. ZELENY ET AL: "An improved non-linear nearly-zero dispersion flattened photonic crystal fiber with the threefold symmetry core", PROCEEDINGS OF SPIE, vol. 8426, 1 June 2012 (2012-06-01), page 84260R, XP055180294, ISSN: 0277-786X, DOI: 10.1117/12.920064
- HANSEN K: "Dispersion flattened hybrid-core nonlinear photonic crytal fiber", OPTICS EXPRESS, OSA (OPTICAL SOCIETY OF AMERICA), WASHINGTON DC, (US), vol. 11, no. 13, 30 June 2003 (2003-06-30) , pages 1503-1509, XP007915896, ISSN: 1094-4087
- R. ZELENY ET AL: "Broadband dispersion decreasing photonic crystal fiber for compression of optical pulses", PROCEEDINGS OF SPIE, vol. 8775, 3 May 2013 (2013-05-03), pages 87750Y-1, XP055180292, ISSN: 0277-786X, DOI: 10.1117/12.2019298
- LUCKI MICHAL ET AL: "Broadband dispersion compensating photonic crystal fiber", PHOTONICS, DEVICES, AND SYSTEMS V, SPIE, 1000 20TH ST. BELLINGHAM WA 98225-6705 USA, vol. 8306, no. 1, 31 December 1899 (1899-12-31), pages 1-6, XP060024582, DOI: 10.1117/12.910720 [retrieved on 1901-01-01]
- KAREN MARIE HILLIGSØE ET AL: "Supercontinuum generation in a photonic crystal fiber with two zero dispersion wavelengths", OPTICS EXPRESS, vol. 12, no. 6, 22 March 2004 (2004-03-22) , pages 1045-154, XP055180751,

## Description

The subject of invention is a microstructured optical fibre with selectively enlarged spaces of decreased refractiveindex, especially for the generation of nonlinear effects and stress measurements.

An effective broad-spectrum source of light is a sought product for its wide application potential, opening perspectives for its use in many fields of science and technology, including microscopy, spectroscopy, metrology and others. Moreover, with a broad spectrum of light at hand, it is possible, by the use of special optical filter, to isolate wavelengths, which are impossible to obtain with conventional lasers. The possibility of generating broad-spectrum light is based on a series of nonlinear events which, when combined together, provide a radiation spectrum with a very broad range of wavelength. Among these events, one should highlight nonlinear effects of particular significance, including self phase modulation, four wave mixing, cross phase modulation, modulation instability), stimulated Raman scattering and others. A combination of these effects broadens light pulse spectrum, resulting in the generation of supercontinuum (SC). With the generated supercontinuum, using a light pulse with narrow spectral width, we obtain a broad range of wavelengths, what is provided by the above-mentioned nonlinear effects and their mutual interactions. The medium, in which nonlinear effects occur, may be glass or optical fibre, in particular, microstructured optical fibre (MOF).

Before the invention of microstructured fibres, by means of which supercontinuum can be generated, the effect was achieved in glasses and optical fibres. This way of supercontinuum generation required, however, the use of long optical fibre sections, optical fibre narrowing and lasers with extreme peak power levels, e.g., titanium sapphire femtosecond lasers. In spite of that, classical optical fibres do not allow for adaptation of their chromatic dispersion characteristic and higher orders of dispersion in such a broad range, as it is possible with the use of MOF, in order to obtain the expected spectrum of optical fibre light source, such as, for example, supercontinuum. Additionally, this extremely broad range of possible changes in chromatic dispersion characteristic and of higher dispersion orders opens perspectives for the engineering of nonlinear effects and their use in highly demanded applications. One of the examples of such effects may be the generation of entangled photons and their use for quantum cryptography. Other applications include, for example, optical fibre adjustable light sources, etc.

The disclosed by literature, microstructured optical fibres, are characteristic for their air-holes. The physical possibilities of light concentration in a small core, surrounded by air-holes, make it possible to obtain effects and parameters which do not occur in conventional optical fibres. With these potentials, microstructured optical fibres find applications in: optical fibre transmission, optical fibre lasers, non-linear instruments, high power transmissions, various sensors, adjustable optical fibre components (e.g., switches, filters) and others.

The disclosed by literature microstructured optical fibres, used for the generation of nonlinear effects, are characterised by a very small core (usually below 2 µm). In case of such a minimised size, light is trapped on the area by two orders smaller vs. conventional microstructured optical fibres. The parameter, which quantitatively determines the degree of light entrapment on a given area, is mode field concentricity. The higher is the mode field concentricity, the lower power levels of the pumping laser are required to observe nonlinear effects in demanded scale, such as, for example, the generation of supercontinuum. The optical fibre parameter, which enables comparing its non-linear properties is the nonlinearity parameter, expressed by the ratio of the nonlinear refractive index of the material, of which the optical fibre is made, to the mode field propagated in this optical fibre. Additionally, in order to increase the parameter of nonlinearity, one may use special glass types, which are characterised by high nonlinearity, e.g., tellurium or chalcogenide glass. The applied combination of a small core with a high nonlinearity index of the material allows obtaining extreme nonlinearity levels. The use of glass, other than silica, is, however, expensive and problematic. Moreover, the production of optical fibre with a minimised core involves serious technological difficulties, as well as the risk of considerable deviations from designed and calculated dimensions and, in consequence, dispersive properties, what precludes the generation of nonlinear effects. In a number of disclosed microstructured optical fibres, because of the minimised core, there is unfavourable insulation between the core and the optical fibre cladding; such a core is referred to in the literature as 'suspended core'.

Before microstructured optical fibres with reduced core were discovered and used for the generation of nonlinear effects, the mode field concentricity was possible in fibre tapers only. At present, such tapering methods are also used in microstructured optical fibres to obtain broad spectra. Tapering of a microstructured optical fibre in such a way as to obtain the required changes in its geometry and with appropriate accuracy, results in construction of an extremely fragile and mechanically unstable element, very difficult to be used in practical applications, while often with a compromised control of chromatic dispersion characteristic. Moreover, optical fibre tapering prevents any control of the mode characteristics of propagated radiation (e.g., disturbs the single-mode operations), thus unfavourably affecting the supercontinuum spectrum stability.

An example of obtaining the effects of supercontinuum may be the optical fibre according:o US20130182999 in which, sections of microstructured optical fibre are tapered and the tapering is a condition for the generation of supercontinuum. Whereas, microstructured optical fibres may be produced in any lengths and diameters, matching the standard optical fibres, e.g., the SMF-28e optical fibre of the Corning company, which is a fibre, meeting the G.652 recommendation.

Another optical fibre has been disclosed by the article "New nonlinear and dispersion flattened photonic crystal fibre with low confinement loss", by Ming Chen and Shizhong Xie, published in Optics Communications 281 (2008) 2073-2076. The solution, proposed by the authors, is a microstructured optical fibre with selectively increased holes in the first ring and with increasing sizes of the holes in subsequent rings, starting from the core. The proposed dimensions of Λ = 1.5 µm; diameter of the core d₁ = 1.2 µm; diameters of the holes: d₂ = 0.24 µm, d₃= 0.54 µm, d₄= 0.32 µm, d₅ = 0.36 µm, d₆= 0.4 µm. determine a considerable minimisation of the structure, which minimisation has been avoided in the present invention. Moreover, in the version of the optical fibre, as described in the article, the fiber has a germanium doped core, what provides another degree of freedom, impeding the technological process. Also the presence of a doped core brings about that the maximal power density, which may be guided via the optical fibre, is lower than in case of undoped core. In case of the optical fibre with selectively increased holes, according to this invention for the generation of nonlinear effects, core doping is not necessary. First of all, however, the above-mentioned article discusses the results of numerical simulations only, what is obvious for technological reasons, as the production of an optical fibre with air-holes of six different diameters is practically unfeasible. The combination of the necessity to build a very difficult structure, determined by the differences in hole sizes, as proposed by the authors, with an additional minimisation of overall dimensions, precludes any chance for higher dimensional tolerances. However, as it is disclosed by the literature, in case of nonlinear optical fibres, the higher is the microstructure minimisation, the lower is the dimensional tolerance and it is more difficult to maintain the required fibre parameters. It seems from the diagrams, enclosed to the article, that the dimensional tolerances for the project, proposed by the authors, are at the level of approximately 0.1 µm for the core diameter and approximately 0.05 µm for the diameters of the largest holes.

In order to generate supercontinuum, a high nonlinearity parameter in the optical fibre is a necessary, but still unsatisfactory condition. Equally important is an effective control of the dispersion parameter, as well as the structure properties, allowing for single-mode operation of the optical fibre. Both these aspects, i.e., dispersion control and maintained single-mode structure, have simultaneously been developed with the appearance of microstructured optical fibres.

Optical fibre dispersion determines changes in the speed of propagating electromagnetic wave, depending on its frequency (wavelength), and may be expressed in negative and positive values. When dispersion presents positive values, it is called anomalous, while in case of negative values, it is referred to as normal dispersion. One of the most significant parameters of dispersion characteristic is the zero dispersion wavelength (ZDW), i.e., the wavelength for which dispersion is zero. Very important is also the dispersion curve slope, especially at ZDW or, in general, higher dispersion orders. When pumping (the introduction of short light pulse) of microstructured fibre is done with a laser source, generating femtosecond pulses of wavelength, corresponding to the range, in which the optical fibre demonstrates normal dispersion, it is possible to obtain more time-coherent spectra than for pumped fibres in the range of anomalous dispersion. In a situation when pumping is done by means of a laser source with picosecond or longer pulses, the mechanisms (especially the effect of modulation instability) of solution formation disturb the production of time-coherent spectra. The occurrence of normal dispersion for the pump signal provides better coherence properties than if anomalous dispersion corresponds to pump signal. Simultaneously, pumping in the range of anomalous dispersion, close to zero of optical fibre dispersion, often enables obtaining a broader spectrum than if pumping is carried out in the range of normal dispersion.

The requirement of single-mode operation in the generation of supercontinuum is dictated by the fact that the occurrence of higher order modes to obtain such spectrum generates the necessity to use higher power levels than in case of single-mode guidance. It results from the fact that the modes of higher order often generate less effective supercontinuum, as their dispersion characteristics are different from that of the basic mode. Moreover, in a situation, where several modes are propagated in the fibre structure, it is much more difficult to fulfil the condition of phase matching, necessary for the occurrence of nonlinear effects, what may, in consequence, bring about power instability in the spectral distribution of the supercontinuum or decrease the effective nonlinearity, i.e., shift the borderline from which nonlinear events occur. The geometry of the light beam, leaving the optical fibre and often described as the M² parameter, is very important from the point of view of applications. If this parameter is close to 1 as much as possible, we may speak about high quality beam and it is just the case with single-mode propagation in optical fibre. When propagation and, in consequence, light generation in optical fibre is not single-mode, the M² parameter demonstrates values which are often much higher than 1 and then, the use of such light beam in various optical systems is much more difficult.

Single-mode guiding, especially for shorter wavelengths, is impeded in case of optical fibres with suspended core (or, more generally, in cores, surrounded with holes of big total area), which frequently occur in the disclosed solutions of optical fibres for the generation of nonlinear effects. It is so because the core surrounding cladding consists, in fact, of air-holes, separated by very thin bridges or relatively small glass areas. Such a structure disables any escape of higher order modes from the core area. In order to achieve a situation, in which a structure, consisting of a core and holes, guided a single mode in possibly a broad spectra range, it is necessary that the filling parameter (the ratio of air-hole to the distance between holes) did not exceed 0.45.

A possibility of effective governance of dispersion zero location to the pump wavelength (the light pulse introduced into the optical fibre) and of proper slope of the dispersion curve and the higher order dispersion characteristics, close to the pump wavelength, what will enable the generation of supercontinuum in a broad spectral range with simultaneous, single-mode guidance, is a solution, much searched in technology, which will considerably improve the quality of broad-range spectra and provide new designs of fibre light sources. At the same time, the current solutions do not solve the problem of core suspension limits, its dimensions, technologically difficult to obtain in result of their minimisation (to achieve high mode concentricity), while necessary to maintain the calculated fibre properties. Additionally, such optical fibres are much more difficult to be cleave, while maintaining optical quality on the cleaved surface.

Therefore, the goal of the invention was a design of such fibre geometry in which the minimisation of core dimensions to the size, as in the disclosed solutions, is not necessary to generate supercontinuum, as such minimisation requires expensive and complex production processes. Second, the goal was a design of such a structure, in which it will not be necessary to simulate the nonlinearity parameter increase by the use of material with high nonlinearity and where the optical fibre can be produced of available, conventional materials. Third, the goal of this invention was a design of optical fibre structure with such geometry, which will be characteristic of high geometric tolerances. This aspect is of particular significance, as in the available solutions, any minimal deviations from designer geometry, highly impede, if not even frequently preclude the occurrence of demanded nonlinear effects in fibre. Whereas the deviations from designed fibre geometry are unavoidable for: technological imperfections of the fibre production process (microstructured nonlinear optical fibres are most often produced by the well known and described stack-and-draw method), which include differences in the dimensions of capillaries, constituting the proforma to draw, the impossibility of accurate control of temperature in the stove, of applied pressure, of optical fibre drawing speed and others. The high tolerance level for deviations of geometric parameters from the values, assumed in designed model, facilitates the control of production process of the optical fibre with required dispersion features and allows to maintain stability of the following parameters: dispersion characteristic, single-mode guidance and the nonlinearity parameter.

At the same time, the primary goal of the invention was design of an optical fibre with structure, providing single-mode guidance and designed in such a way as to facilitate manipulation of dispersion zero point vs. the planned pump wavelength and the expected wavelength to be obtained by the generation of supercontinuum. In particular, the goal is to achieve dispersion zero in the range of visible wavelengths, what allows for the generation of supercontinuum in the range of wavelength close to infrared, VIS and UV.

A simultaneous implementation of the above-mentioned, five goals has not been achieved in any of the disclosed solutions.

Another, parallel goal of the invention was design of such optical fibre geometry which will be characteristic of high sensitivity to mechanical stress, in particular to tensile stress but also to compression, bending, twisting, pressure or any other stress types, with simultaneous single-mode guidance option.

A microstructured optical fibre has been disclosed by the EP 1582915 patent description, in which the irefractive index of the glass, used for the optical fibre production, rises in the radial direction outwards from the core centre, while in the cross-section, the irefractive index of the glass, used for the optical fibre production has got a shape close to reversed Gauss curve. An optical fibre, designed according to this solution, does not, however, allow for single-mode guidance and all the holes in its structure are of the same size. Additionally, this type of optical fibre geometry does not allow for any shift of dispersion zero point.

Also disclosed is the optical fibre from the US 20050238307 patent description, in which an optical fibre design has been disclosed, where the core is covered with cladding, in which the refractive index is differentiated, depending in the distance of a given cladding point to the core. The areas with decreased irefractive index relative to the core reveal refractive indices which differ among one another. The structure, as disclosed in the description, does not allow to achieve single-mode guidance, and dispersion zero occurs only in the IR range.

There are also other disclosed optical fibres, the effective operation of which is possible within selected wavelengths only, e.g., the optical fibre, disclosed by the US 6959135 patent description, in which the effective optical core area is below 30 µm, while the most effective wavelength for the optical fibre is 1550 nm.

In turn, the EP 1148360 patent description discloses an optical fibre, by means of which, dispersion control is possible. In the optical fibre, according to that invention, dedicated to telecommunication applications, the parameter of nonlinearity is limited, since its high values would preclude application of the optical fibre in telecommunications. In the optical fibre, designed according to this disclosure, no nonlinear events occur as long as extreme power levels are not applied. A system of spaces with decreased refractive index, configured around the core, is characterised by equal sizes of these spaces. Moreover, there is a maximum of two rings of the spaces with decreased refractive index, what is often not enough to achieve a satisfyingly low level of transmission losses and the filling parameter of the optical fibre does not enable single-mode guidance. Moreover, in order to compensate dispersion in the optical fibre, according to this invention, it is necessary to apply two fibre sections, where one will have normal dispersions and the other one anomalous dispersion.

A nonlinear optical fibre, disclosed in the EP 2533081 patent description, is used for the generation of nonlinear effects, in which spaces with refractive index, increased relative to the core, are configured around the central optical fibre area (the core). Such an optical fibre structure determines signal guidance in result of challenge between two propagation mechanisms: so called, index-guiding and via photonic band-gap. In result, there are often more than one mode in the structure of such an optical fibre, what precludes single-mode guidance for a broader spectrum. The optical fibre, according to that invention, is intended to generate nonlinear effects for single/discrete wavelengths, in result of which, for example, it is possible to generate new light wave frequencies/lengths with, among others, frequency tripling and others. In result of these effects, new wavelengths appear in spectrum, but continuous spectrum is impossible to achieve, such as with the generation of supercontinuum. Moreover, the structure of the optical fibre, according to that invention, beside the areas with increased refractive index vs. the refractive index assigned to the core, precluding the guidance of broader wavelength ranges in the core, reveals the dimensional equality of the areas with both the increased and non increased refractive index.

There is also an optical fibre, disclosed by the EP 1205788 patent description, in which, there are enlarged spaces with decreased refractive index in the first ring around the core, and where the dimensional increase of the spaces with decreased refractive index applies to all the spaces in a given ring. Around the microstructure, in which light is guided, instead of the glass matrix of the type, used in the majority of disclosed optical fibres, there are areas with decreased refractive index (called capillaries) and of diameter, close to the size of the microstructure through which light is guided. The optical fibre, according to the invention, concerns a solution of the problem of quasi phase matching, used for the generation of single no-linear effects for discrete, selected wavelengths. Examples of optical fibres according to the invention include optical fibres, in which single-mode guidance is achieved but changes of the chromatic dispersion characteristic of the described structure are obtained in a completely different and much more complicated way, difficult for technological processing in comparison with our invention. Additionally, the dispersion zero point in the structure, disclosed in EP 1205788, is possible only in the infrared range.

Similarly as in the EP 2533081 patent description, the structure, according to the EP 1205788 patent description, allows for the generation of nonlinear effects, but only such, in result of which, no broad, continuous spectrum is achieved (as in the generation of supercontinuum). Thus it is optimised with regards to the effects, increasing the number of wavelengths in spectrum (e.g. frequency tripling) and so, the need for quasi phase matching appears, and not with regards to obtaining a broad, continuous spectrum (the generation of supercontinuum). Moreover, the way of optical fibre production, according to that invention, is complicated and requires the application of troublesome and expensive elements in the optical fibre structure, such as, among others, the electrodes, which elements cannot be applied in standard optical fibre production lines.

All these imperfections, known from the technology status, namely: simultaneous achievement of single-mode beam guidance, the possibility of relatively easy manipulation of chromatic dispersion characteristic, including the optical fibre dispersion zero point location, the slope of dispersion curve and the course of higher order dispersion, as well as the limitation of optical fibre core dimensional minimization, i.e., the increase of non-linearity, while giving up the materials which are not easily available and which are expensive, the achievement of the high tolerance for geometric dimensions and the achievement of increased sensitivity to stress, have been surmounted in the microstructured optical fibre with selectively increased spaces of decreased refraction index, especially for the generation of non-linear effects and stress measurements, according to this invention.

The microstructured optical fibre with selectively enlarged spaces of decreased refraction index, especially for the generation of nonlinear effects and stress measurements is made of glass, preferably of silica glass or polymer and includes, at least, one core, covered with cladding, around which, uniform spaces are localized, all of them in shape close to the circle in their cross-section and with the index of refraction, decreased relative to the core and the cladding, filled preferably with gas, preferably with air or a fluid or a polymer. The core should be understood as the area with increased refractive index relative to surrounding spaces (e.g., air-holes). It is preferred, when the optical fibre is applied for stress measurements, the core is doped with germanium, preferably in quantity of, at least, 12%mol Ge. The spaces with decreased refractive index, preferably filled with gas, preferably with the air or a fluid or a polymer, (further as the spaces with decreased refractive index) are circularly configured, making a ring around the core, preferably in the nodes of the hexagonal lattice with distances between lattice nodes equal to the lattice constant. Around the core, there are, at least, two, preferably, at least, three rings, preferably hexagonal rings of the spaces with decreased coefficient of refractive. In, at least, one hexagonal ring, the diameters of the spaces with decreased refractive index, are selectively enlarged, preferably, if the diameter D of every second space with decreased refraction index is enlarged, while being smaller from the double of the lattice constant Λ. The core with the surrounding ring spaces is localised, preferably along the geometric centre of the optical fibre .

It is preferred if the diameters D of all the enlarged spaces with decreased refractive index d are equal, it is also preferred if the diameters of the non enlarged spaces with decreased refractive index d have the same diameter, lower from the lattice constant. Whereas, the ratio of diameter d of the non enlarged space to the lattice constant Λ is preferably lower than 0,45, what guarantees the single-mode character of the structure. The ratio of diameter d of a non enlarged space to the lattice constant Λ is preferably contained within the range of 0.3 - 0.45 (additionally for reduction of losses), preferably from 0.35 to 0.45 (for major reduction of losses).

In the example of the optical fibre make, according to this invention, intended for applications with the generation of nonlinear effects, it is appropriate if the lattice constant Λ of the optical fibre, according to this invention, preferably ranges from 2.15 µm to 2.65 µm, the diameter D of enlarged space, filled with the air, preferably ranges from 2.7µm to 3.3 µm, the diameter d of non enlarged space preferably ranges from 0.9 µm to 1.1 µm, the diameter E of the cladding preferably ranges from 105 µm to 145 µm, and the number of rings with decreased refractive index preferably amounts to, at least two, preferably at least four. In such configuration, it is possible to achieve dispersion zero at the VIS-IR range.

In the example of the optical fibre make, according to this invention, for the stress measurement application, it is appropriate if the lattice constant Λ preferably ranges from 5.5 µm to 6.5 µm, the diameter D of enlarged space with decreased refractive index preferably ranges from 6.5µm to 7.5 µm, the diameter d of not enlarged space with decreased refractive index preferably ranges from 1.75 µm to 2.25 µm, the core diameter preferably ranges from 2.75 µm to 3.25 µm, the cladding diameter E preferably ranges from 105 µm to 145 µm and the number of the rings, made of spaces with decreased refractive index, preferably is, at least, two, preferably, at least, three.

In case of application of the optical fibre, according to this invention, for the generation of nonlinear effects, the diameters d are preferably equal for particular rings, not being, however, bigger from diameters D. Increasing the diameters of non enlarged spaces with decreased refractive index shifts the dispersion characteristic towards shorter wavelength. Simultaneously, increasing the diameters D of enlarged spaces with decreased refractive index leads to curvature of the characteristic towards longer wavelengths, what may bring about the possibility of obtaining the second dispersion zero point in the infrared area, in case of high enlargement of diameters D. The process of shifting the curvature of the dispersion characteristic towards longer wavelength supports also the possibility to enlarge diameters d, especially in the first ring. The effect of shifting the dispersion zero towards shorter wavelengths and of the characteristic curvature towards longer wavelengths may also be achieved in case of a decrease of the lattice constant Λ. Changes in diameters d in the farther rings enable changes in the curvature of dispersion characteristic, up to the point, in which a relatively flat characteristic curve is obtained, oriented towards wavelengths longer than the first dispersion zero (i.e., the one for the shorter wavelength). Increasing the number n of the rings allows to reduce losses in the optical fibre, preferably if the number of rings is, at least, four. The single-mode character of the structure is achieved when the filling parameter ranges from 0.3 to 0.45, whereas preferable from 0.35 to 0.45. In order to calculate the filling parameter for the optical fibres according to this invention, it is necessary to calculate the ratio of the diameter d of non enlarged hole, in particular in the first ring, to the lattice constant.

In case when the optical fibre is applied for the generation of nonlinear effects, the considerable and simultaneous increase of the lattice constant Λ and of the space diameters D and d impede the generation of non-linear events for the decreasing mode field concentricity and the unfavourable shift of the dispersion characteristic, in particular, the dispersion zero point, moreover, such a structure requires the use of high power lasers, which are expensive and, in general, not easily available, dangerous and rarely used in application solutions. The optical fibre, according to this invention, in case of the proposed dimensions for the generation of nonlinear effects, provides an alternative for disclosed solutions, as the dimensional minimisation in the optical fibre, according to this invention, is much lower than in case of other, disclosed solutions, thus it becomes possible to use available light sources of relative low power levels with a simultaneous saving of production costs, which grow with dimensional minimisation.

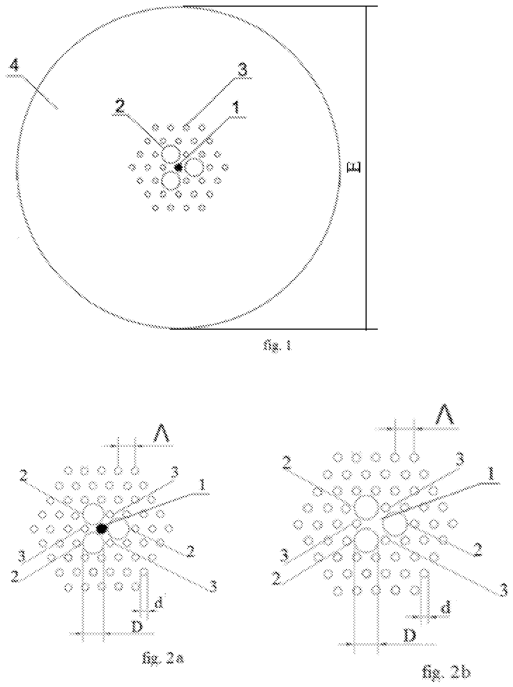

A microstructured optical fibre with selectively enlarged spaces of decreased refraction index, especially for the generation of nonlinear effects and stress measurements is presented in drawing configuration, on which, Fig. 1 presents a schematic cross-section of the optical fibre, according to this invention, Fig. 2a presents a detailed view of the air-space system in case of the application for stress measurements, Fig. 2b presents a detailed view of the air space system in case of the generation of non-linear effects.

### Example I

A microstructured optical fibre with selectively enlarged spaces of decreased refraction index, especially for the generation of nonlinear effects and stress measurements, according to this invention, is made of silica glass and includes the core 1, covered with the cladding 4, in which, around the core 1, there are uniform spaces, with their cross-section shape close to circle 2 and 3, filled with the air. The core should be understood as the area with increased refractive index relative to the surrounding structures. The air-filled spaces 2 and 3 are located in a ring around the core 1 in nodes of hexagonal lattice with distances between lattice nodes equal to the lattice constant Λ. Around the core 1, there are four hexagonal rings of air-filled spaces 2 and 3. The diameter D of every-second air-filled space is enlarged. The core 1 and the surrounding ring 5 with spaces 2 and 3 are localised along the geometric centre of the optical fibre.

The diameters D of all the enlarged, air-filled spaces 2, are equal, while the diameters d of the non enlarged, air-filled spaces 3 are equal and lower from the lattice constant Λ.

The lattice constant Λ of the optical fibre, according to this invention, is 2.4 µm, the diameter D of enlarged, air-filled space is 3 µm, the diameter d of non enlarged, air-filled space is 1 µm, the diameter of the cladding E is 125 µm and the number of the rings with air spaces is four.

### Example II

A microstructured optical fibre with selectively enlarged spaces of decreased refraction index, especially for the generation of non-linear effects and stress measurements, according to this invention, is made of silica glass and includes the core 1, covered with the cladding 4, in which, around the core 1, there are uniform spaces with their cross-section shape close to circle, air-filled spaces 2 and 3. The core should be understood as the area with increased refractive index relative to the surrounding structures. The silica core 1 is doped with germanium in quantity of 12%mol Ge. The air-filled spaces 2 and 3 are located in a ring around the core 1 in nodes of hexagonal lattice with distances between lattice nodes equal to the lattice constant Λ. Around the core 1, there are four hexagonal rings of air-filled spaces 2 and 3. The diameter D of every-second air-filled space is enlarged. The core 1 and the surrounding ring 5 with spaces 2 and 3 are localised along the geometric centre of the optical fibre.

The diameters D of all the enlarged, air-filled spaces 2, are equal, while the diameters d of the non enlarged, air-filled spaces 3 are equal and lower from the lattice constant Λ.

The lattice constant Λ of the optical fibre, according to this invention, is 6 µm, the diameter D of enlarged, air-filled space is 7 µm, the diameter d of non enlarged, air-filled space is 2 µm, the core 1 diameter is 3 µm, the cladding diameter is 125 µm and the number of the rings with air spaces is three.

## Claims

1. Microstructured optical fibre for the generation of nonlinear effects and stress measurements, made of silica glass or polymer having
non-enlarged spaces (3) having cross-section close to circle of diameter d, of decreased refractive index with relative to the core area (1) and the cladding (4), and
enlarged spaces (2) having cross-section close to circle of diameter D, of decreased refractive index with relative to the core area (1) and the cladding (4),
arranged in rings around the core area (1),
wherein spaces (2, 3) are filled with gas,and are located in nodes of hexagonal lattice with lattice constant Λ,
in at least one ring every-second space (2) is enlarged, and the number of the rings of spaces (2, 3) is two at the minimum,
the diameters D of enlarged spaces (2) is smaller than the double lattice constant: (D<2·Λ), the diameters d of non enlarged spaces (3) is smaller than the lattice constant (d<Λ), **characterized in that** the ratio of the diameter d of non-enlarged spaces (3) to the lattice constant Λ is within the range from 0.30 to 0.45,
the lattice constant Λ is within the range from 2.15 µm to 2.65 µm and the diameter D of enlarged spaces (2) is within the range from 2.7 µm to 3.3 µm, the diameter d of non enlarged spaces (3) is within the range From 0.9 µm to 1.1 µm, the cladding diameter (E) is within the range from 105 µm to 145 µm.

2. Optical fibre according to claim 1, **characterized in that** the core area (1) is doped silica core.

3. Optical fibre, according to claim 1 or 2, **characterized in that** the doped silica core is doped with germanium in quantity of, at least, 12%mol Ge.

## Patentansprüche

1. Mikrostrukturierte optische Faser für die Erzeugung nichtlinearer Effekte und Spannungsmessungen, hergestellt aus Quarzglas oder Polymer mit
nicht vergrößerten Hohlräumen (3) mit einem Querschnitt nahe dem Kreis des Durchmessers d, mit vermindertem Brechungsindex in Bezug auf den Kernbereich (1) und den Mantel (4), und
vergrößerten Hohlräume (2) mit einem Querschnitt nahe dem Kreis des Durchmessers D, mit vermindertem Brechungsindex in Bezug auf den Kernbereich (1) und den Mantel (4),
in Ringen um den Kernbereich angeordnet (1),
wobei die Hohlräume (2, 3) mit Gas gefüllt sind und sich in Knoten eines hexagonalen Gitters mit der Gitterkonstante Λ befinden;
in mindestens einem Ring wird jeder zweite Hohlraum (2) vergrößert,
und
die Anzahl der Hohlraumringe (2, 3) beträgt mindestens zwei,
die Durchmesser D der vergrößerten Hohlräume (2) sind kleiner als das Zweifache der Gitterkonstante: (D < 2•A),
die Durchmesser d von nicht vergrößerten Hohlräumen (3) sind kleiner als die Gitterkonstante (d < Λ),
**dadurch gekennzeichnet, dass**
das Verhältnis des Durchmessers d von nicht vergrößerten Hohlräumen (3) zur Gitterkonstante Λ innerhalb des Bereichs von 0,30 bis 0,45 liegt,
die Gitterkonstante A innerhalb des
Bereichs von 2,15 µm bis 2,65 µm liegt und der Durchmesser D von vergrößerten Hohlräumen (2) innerhalb des Bereichs von 2,7 µm bis 3,3 µm liegt,
der Durchmesser d von nicht vergrößerten Hohlräumen (3) innerhalb des Bereichs von 0,9 µm bis 1,1 µm liegt,
der Manteldurchmesser (E) innerhalb des Bereichs von 105 µm bis 145 µm liegt.

2. Optische Faser gemäß Anspruch 1, **dadurch gekennzeichnet, dass** der Kernbereich (1) ein Kern aus dotiertem Siliciumdioxid ist.

3. Optische Faser gemäß Anspruch 1 oder 2, **dadurch gekennzeichnet, dass** der Kern aus dotiertem Siliciumdioxid besteht, das mit Germanium in einer Menge von mindestens 12 % Mol Ge dotiert ist.

## Revendications

1. Fibre optique microstructurée pour la génération d'effets non linéaires et de mesures de
contrainte, fait de verre de silice ou de polymère ayant
des espaces non agrandis (3) ayant une section transversale proche d'un cercle de diamètre d, d'indice de réfraction réduit par rapport à la zone de cœur (1) et à la gaine (4), et
des espaces agrandis (2) ayant une section transversale proche d'un cercle de diamètre D, d'indice de réfraction réduit par rapport à la zone de cœur (1) et à la gaine (4),
disposé dans anneaux autour de la zone de cœur (1),
dans laquelle les espaces (2, 3) sont remplis de gaz, et sont situés dans des nœuds de réseau hexagonal avec une constante de réseau Λ,
dans au moins un anneau toutes les deux espace (2) est agrandi,
et
le nombre d'anneaux d'espaces (2, 3) est de deux au minimum,
le diamètre D des espaces agrandis (2) est inférieur au double de la constante de réseau : (D<2•Λ),
le diamètre d des espaces non agrandis (3) est inférieur à la constante de réseau (d<Λ),
**caractérisée en ce que**
le rapport du diamètre d des espaces non agrandis (3) sur la constante de réseau Λ est dans la plage de 0,30 à 0,45,
la constante de réseau Λ est dans la plage de 2,15 µm à 2,65 µm et le diamètre D des espaces agrandis (2) est dans la plage de 2,7 µm à 3,3 µm,
le diamètre d des espaces non agrandis (3) est dans la plage de 0,9 µm à 1,1 µm,
le diamètre de gaine (E) est dans la plage de 105 µm à 145 µm.

2. Fibre optique selon la revendication 1, **caractérisée en ce que** la zone de cœur (1) est un cœur de silice dopée.

3. Fibre optique selon la revendication 1 ou 2, **caractérisée en ce que** le cœur de silice dopée est dopé avec du germanium dans une quantité d'au moins 12 % mol de Ge.
